# EUROPÄISCHE PATENTSCHRIFT

(11) **EP 2 864 732 B1**
(45) Veröffentlichungstag und Bekanntmachung des Hinweises auf die Patenterteilung: **20.09.2017**
(21) Anmeldenummer: 13729915.2
(22) Anmeldetag: 05.06.2013
(51) Int. Cl.: F41H 7/04, B60F 3/00

(54) **GEHÄUSE FÜR EINEN HILFSSTROMERZEUGER, HILFSSTROMERZEUGER UND FAHRZEUG**
HOUSING FOR AN AUXILIARY POWER GENERATOR, AUXILIARY POWER GENERATOR, AND VEHICLE
CAISSE POUR UN GÉNÉRATEUR DE COURANT AUXILIAIRE, GÉNÉRATEUR DE COURANT AUXILIAIRE ET VÉHICULE

(30) Priorität: 26.06.2012 DE 102012105568
(43) Veröffentlichungstag der Anmeldung: 29.04.2015
(73) Patentinhaber: Krauss-Maffei Wegmann GmbH & Co. KG, 80997 München (DE)
(72) Erfinder: HINDL, Thomas, 80997 München (DE); SEIDERER, Dominik, 80997 München (DE); GENSICKE, Heinz, 80997 München (DE)
(74) Vertreter: Feder Walter Ebert
(86) Internationale Anmeldenummer: PCT/DE2013/100201
(87) Internationale Veröffentlichungsnummer: WO 2014/000730

(56) Entgegenhaltungen:
- EP-A1- 1 562 019
- EP-A2- 0 825 410
- EP-A2- 0 878 889
- DE-A1-102008 063 674
- US-A- 4 992 669

## Beschreibung

Die Erfindung betrifft ein Gehäuse für einen Hilfsstromerzeuger eines militärischen Fahrzeugs sowie einen Hilfsstromerzeuger mit einem derartigen Gehäuse. Ein weiterer Gegenstand der Erfindung ist ein militärisches Fahrzeug mit einem solchen Hilfsstromerzeuger.

Militärische Fahrzeuge sind üblicherweise als gepanzerte Rad- oder Kettenfahrzeuge ausgebildet und werden über ein Triebwerk angetrieben. Zusätzlich weisen derartige Fahrzeuge oftmals einen Hilfsstromerzeuger zur Erzeugung von elektrischer Energie auf, welcher unabhängig von dem Triebwerk betrieben werden kann. Mittels derartiger Hilfsstromerzeuger kann in dem Fahrzeug auch dann elektrische Energie bereitgestellt werden, wenn das Triebwerk des Fahrzeugs abgeschaltet ist. Die durch den Hilfsstromerzeuger erzeugte Energie kann in dem Fahrzeug beispielsweise zum Betrieb einer Waffenanlage, einer Klimaanlage oder einer Kommunikationseinrichtung genutzt werden.

Solche Hilfsstromerzeuger weisen üblicherweise einen Generator auf, welcher mechanisch mit einem Hilfsmotor gekoppelt ist. Der Hilfsmotor ist in der Regel als Verbrennungsmotor ausgebildet. Zum Starten des Hilfsmotors und zur Speicherung der erzeugten elektrischen Energie können derartige Hilfsstromerzeuger ferner einen elektrischen Energiespeicher, z. B. eine Batterie oder einen Kondensator aufweisen.

Im militärischen Anwendungsbereich sind Fahrzeuge und damit auch die an ihnen angeordneten Hilfsstromerzeuger unterschiedlichen äußeren Einwirkungen ausgesetzt. Im Rahmen einer Tauchfahrt des Fahrzeugs, beispielsweise bei der Querung eines Flusses, kann z. B. Wasser in den Hilfsstromerzeuger eindringen und somit die Funktionalität elektrischer Komponenten stören. Ferner können die Komponenten des Hilfsstromerzeugers durch Sonneneinstrahlung oder durch Wärmeabstrahlung anderer Komponenten unerwünscht aufgeheizt werden und ggf. ausfallen. Bereits der Ausfall einer einzelnen Komponente, beispielsweise des Energiespeichers, kann den Ausfall des gesamten Hilfsstromerzeugers nach sich ziehen und die Funktionalität des militärischen Fahrzeugs stark einschränken.

In militärischen Fahrzeugen ist der Einsatz von Stromerzeugern grundsätzlich bekannt: Die EP 0 825 410 A2 zeigt ein Gefechtsfahrzeug mit mehreren kleinen Dieselmotoren, an die jeweils ein Elektrogenerator angeflanscht ist, die Leistung zur Versorgung von Elektromotoren an den Ketten bereitstellen. Die EP 1 562 019 A1 zeigt ein gepanzertes Fahrzeug mit einer Brennstoffzellenanlage für die Versorgung der elektrischen Antriebsmotoren für die Fahrzeugbewegung und die Versorgung von weiteren elektrischen Verbrauchern. Die EP 0 878 889 A2 zeigt eine elektrische Versorgungseinrichtung für ein militärisches Fahrzeug mit einem Generator, der vom Fahrzeugtriebwerk angetrieben wird und zur Versorgung des Bordnetzes sowie zur Aufladung von Batterien dient. Die EP 1 050 736 A2 zeigt ein Kampffahrzeug mit einer elektrothermischchemischen Kanone und einem Pulsenergiespeicher, der über einen Energiepufferspeicher mit einem von eimem Verbrennungsmotor angetriebenen elektrischem Generator verbunden ist.

Vor diesem Hintergrund stellt sich die Erfindung die Aufgabe, die Verfügbarkeit des Hilfsstromerzeugers zu erhöhen.

Bei einem Hilfsstromerzeuger der eingangs genannten Art wird die Aufgabe durch die Merkmale des Anspruchs 1 gelöst.

Erfindungsgemäß weist das Gehäuse einen Generatorraum zur Anordnung eines mit einem Hilfsmotor gekoppelten Generators, einen Energiespeicherraum zur Anordnung eines Energiespeichers zum Starten des Hilfsmotors und/oder zum Zwischenspeichern der vom Generator erzeugten Energie und einen Kühlanlagenraum zur Anordnung einer Kühlanlage zum Kühlen des Generators und/oder des Hilfsmotors auf, wobei der Generatorraum, der Energiespeicherraum und der Kühlanlagenraum voneinander getrennt ausgebildet sind. Es hat sich gezeigt, dass durch eine Trennung dieser Komponenten die Verfügbarkeit des Hilfsstromerzeugers und somit des Fahrzeugs erhöht werden kann.

Der Generatorraum, der Energiespeicherraum und der Kühlanlagenraum können in einem gemeinsamen Gehäuse angeordnet sein. Das Gehäuse kann als mehrräumiges Gehäuse ausgebildet sein oder aus mehreren Einzelgehäusen bestehen, welche zu einem Gehäuse zusammengefügt sind.

Der Generator, der Energiespeicher und die Kühlanlage können jeweils in einem eigenen Raum des Gehäuses angeordnet werden. Durch die räumliche Trennung der Komponenten des Hilfsstromerzeugers, wird es möglich, die Komponenten unabhängig voneinander gegen Wassereinwirkung und/oder Gaseinwirkung abzudichten. Ferner können die Komponenten unabhängig voneinander temperiert und/oder gegenüber der Umgebung thermisch isoliert werden. Aufgrund der an die Schutzerfordernisse der einzelnen Komponenten des Hilfsstromerzeugers angepassten einzelnen Räume kann die Wahrscheinlichkeit von Ausfällen der Komponenten verringert und die Verfügbarkeit des Hilfsstromerzeugers verbessert werden.

Erfindungsgemäß weist das Gehäuse Trennwände auf, welche den Generatorraum, den Energiespeicherraum und den Kühlanlagenraum voneinander trennen. Die Räume können unmittelbar aneinander angrenzen, so dass ein kompakter Aufbau des Gehäuses ermöglicht wird.

In diesem Zusammenhang hat es sich als vorteilhaft erwiesen, wenn die Trennwand eine Leitungsdurchführung für Gas-, Flüssigkeits- und/oder Elektrik-Leitungen aufweist. Durch eine Leitungsdurchführung können elektrische, hydraulische, pneumatische Leitungen und/oder Wärmemittelleitungen durch die Trennwand durchgeführt werden. Es ist daher möglich, elektrische Energie bzw. Wärmemittel zwischen den in den einzelnen Räumen angeordneten Komponenten des Hilfsstromerzeugers auszutauschen.

Grundsätzlich ist es möglich, den Generatorraum, den Energiespeicherraum und den Kühlanlagenraum an beliebiger Stelle innerhalb des gemeinsamen Gehäuses anzuordnen. Es hat sich jedoch als vorteilhaft erwiesen, wenn der Energiespeicherraum auf einer ersten Seite des Generatorraums angeordnet ist und der Kühlanlagenraum auf einer der ersten Seite gegenüberliegenden Seite des Generatorraums angeordnet ist. Die Abwärme des Hilfsmotors kann aus dem Generatorraum in Richtung des Kühlanlagenraums abgeleitet werden, so dass die Beeinflussung der Temperatur in dem Energiespeicherraum und damit eine Aufheizung der Energiespeicher möglichst gering gehaltern werden kann.

Im Hinblick auf den Schutz gegen eindringendes Wasser während einer Tauchfahrt des militärischen Fahrzeugs ist es vorteilhaft, wenn der Energiespeicherraum, der Generatorraum und der Kühlanlagenraum derart gegeneinander abdichtbar sind, dass kein Austausch von Luft und/oder Wasser zwischen den Räumen möglich ist. Es wird somit möglich, den Einlass von Luft bzw. Wasser in die einzelnen Räume unabhängig voneinander zu regeln. Ggf. vorhandene Leitungsdurchführungen zwischen den einzelnen Räumen können entsprechend abdichtbar sein.

Zum Schutz der Energiespeicher ist es vorteilhaft, wenn der Energiespeicherraum des Gehäuses wasserdicht abgeschlossen ist, so dass er bei einer Tauchfahrt nicht geflutet wird. Somit kann sichergestellt werden, dass ein Kurzschluss der Energiespeicher aufgrund von eindringendem Wasser verhindert wird.

Bevorzugt ist es ferner, wenn der Kühlanlagenraum Öffnungen aufweist, durch welche bei einer Tauchfahrt Wasser eindringen kann. Durch das eindringende Wasser kann eine zusätzliche Kühlung des Kühlers der Kühlanlage ermöglicht werden. Zudem wird der Aufwand zur Abdichtung des Gehäuses verringert, da es nicht erforderlich ist, den Kühlanlagenraum gegen Wasser abzudichten.

Im Hinblick auf den Schutz des Generators und des Hilfsmotors ist es bevorzugt, wenn der Generatorraum eine schließbare Öffnung aufweist, welche in einem offenen Zustand zur Belüftung des Hilfsmotors luftdurchlässig ist und in einem geschlossenen Zustand luft- und wasserdicht geschlossen ist. Mittels der schließbaren Öffnung kann der Hilfsmotor und der Generator des Hilfsstromerzeugers wahlweise belüftet werden oder gegen das Eindringen von Wasser abgedichtet werden.

In diesem Zusammenhang hat es sich ferner als vorteilhaft erwiesen, wenn zwischen dem Generatorraum und dem Kühlanlagenraum eine schließbare Öffnung angeordnet ist, welche in einem offenen Zustand zur Belüftung des Hilfsmotors luftdurchlässig ist und in einem geschlossenen Zustand luft- und wasserdicht geschlossen ist. Über die schließbare Öffnung kann im offenen Zustand die Abführung der von dem Motor erzeugten Wärme in Richtung des Kühlanlagenraums ermöglicht werden. Im geschlossenen Zustand kann der Generatorraum über die Öffnung gegen das Eindringen von Luft und Wasser geschützt werden.

Neben Wasser- und Wärmeeinwirkungen können sich im militärischen Anwendungsbereich auch Gefahren für die Komponenten des Hilfsstromerzeugers durch das Auftreffen von Geschossen auf das Gehäuse ergeben. Es hat sich daher als vorteilhaft erwiesen, wenn das Gehäuse des Hilfsstromerzeugers zumindest teilweise ballistisch gepanzert ausgebildet ist, so dass die Komponenten des Hilfsstromerzeugers gegen ballistische Geschosse geschützt werden können.

Hierbei ist es bevorzugt, wenn der Energiespeicherraum stärker gepanzert ist als der Generatorraum und/oder der Kühlanlagenraum, da die Energiespeicher aufgrund der in ihr gespeicherten elektrischen Energie eine im Vergleich zu dem Generator und der Kühlanlage erhöhte Verfügbarkeit aufweisen muss. Da die Panzerung im Bereich des Generatorraums und des Kühlanlagenraum weniger stark ausgebildet ist, kann der Materialeinsatz zudem verringert werden und das Gesamtgewicht des Gehäuses reduziert werden.

Im Hinblick auf die Wartung der in dem Gehäuse angeordneten Komponenten ist es bevorzugt, wenn der Generatorraum und/oder der Energiespeicherraum und/oder der Kühlanlagenraum eine verschließbare Wartungsöffnung aufweist. Über die Wartungsöffnung kann ein einfacher Zugang zu den Komponenten des Hilfsstromerzeugers zu Wartungszwecken ermöglicht werden. Besonders bevorzugt ist die Wartungsöffnung als schwenkbares Verschlusselement, insbesondere nach Art einer Tür oder Klappe, ausgebildet.

Darüber hinaus hat es sich als vorteilhaft erwiesen, wenn der Energiespeicherraum des Hilfsstromerzeugers unabhängig von dem Generatorraum temperiert ist, so dass die Energiespeicher eine geringere Temperatur als der Motor und der Generator in dem Generatorraum aufweisen kann. Zur Temperierung des Energiespeicherraums kann der Hilfsstromerzeuger eine separate Energiespeicherkühlanlage aufweisen, welche von der in dem Kühlanlagenraum angeordneten Kühlanlage unabhängig ist.

Bei einem militärischen Fahrzeug der eingangs genannten Art wird die Aufgabe dadurch gelöst, dass ein erfindungsgemäßer Hilfsstromerzeuger an dem Fahrzeug vorgesehen ist. Bei dem militärischen Fahrzeug ergeben sich dieselben Vorteile, wie sie bereits im Zusammenhang mit dem erfindungsgemäßen Gehäuse beschrieben wurden. Auch im Hinblick auf das militärische Fahrzeug können die im Zusammenhang mit dem Gehäuse und/oder dem Hilfsstromerzeuger beschriebenen Merkmale allein oder in Kombination Anwendung finden.

Vorteilhaft ist es ferner, wenn das Gehäuse des Hilfsstromerzeugers an der Außenkontur des Fahrzeugs angeordnet ist, so dass es nicht erforderlich ist, das Gehäuse in den Innenraum des Fahrzeugs einzubringen.

Darüber hinaus ist es vorteilhaft, wenn der Hilfsstromerzeuger einen Stromerzeuger-Wärmekreislauf zum Temperieren des Hilfsmotors mit einer in dem Kühlanlagenraum angeordneten Kühlanlage aufweist, der mit einem Triebwerk-Wärmekreislauf zum Temperieren eines Triebwerks des Fahrzeugs thermisch koppelbar ist. Hierdurch kann der Austausch von Wärme zwischen dem Hilfsstromerzeuger und dem Triebwerk des Fahrzeugs ermöglicht werden. Das Triebwerk kann daher durch die Abwärme des Hilfsstromerzeugers vorgewärmt werden oder mittels der Kühlanlage des Hilfsstromerzeugers zusätzlich gekühlt werden. Zudem kann ermöglicht werden, dass der Hilfsstromerzeuger mittels der Abwärme des Triebwerks vorgewärmt wird bzw. der Hilfsstromerzeuger mittels des Triebwerk-Wärmekreislaufs zusätzlich gekühlt wird. Weitere Einzelheiten der thermischen Kopplung zwischen dem Hilfsstromerzeuger und dem Triebwerk des Fahrzeugs sind Inhalt der zum Zeitpunkt der Einreichung der vorliegenden Anmeldung noch nicht veröffentlichten deutschen Patentanmeldung DE 10 2011 000 951, welche hiermit vollumfänglich in den Offenbarungsgehalt dieser Anmeldung aufgenommen wird.

Weitere Vorteile und Einzelheiten der Erfindung sollen nachfolgend anhand des in den Figuren dargestellten Ausführungsbeispiels erläutert werden. Hierin zeigt:
- Fig. 1: ein militärisches Fahrzeug in schematischer, perspektivischer Darstellung;
- Fig. 2: einen Hilfsstromerzeuger in schematischer, perspektivischer Darstellung.

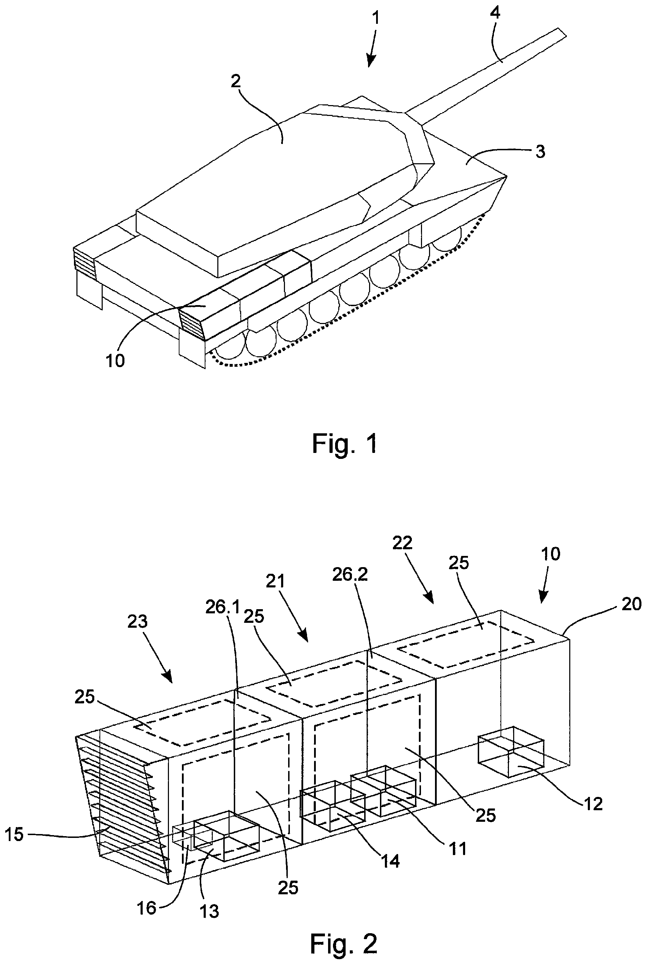

Die Darstellung in Fig. 1 zeigt ein als Kettenfahrzeug ausgebildetes militärisches Fahrzeug 1, welches als Kampfpanzer ausgestaltet ist. Derartige militärische Fahrzeuge 1 sind für Fahrten in offenem Gelände oder über nur leicht befestigte Wege geeignet und ermöglichen Tauchfahrten über kurze Distanzen, z. B. zur Querung eines Flusses oder zum Durchfahren einer Wasserstelle.

Das tauchfähige Fahrzeug 1 ist gepanzert ausgebildet und weist eine Wanne 3 und einen gegenüber der Wanne drehbaren Turm 2 auf, an welchem eine Waffe 4 angeordnet ist. Angetrieben wird das Fahrzeug 1 über ein im Inneren des Fahrzeugs 1 angeordnetes Triebwerk, welches als Verbrennungsmotor ausgebildet ist. Mittels eines mechanisch mit dem Verbrennungsmotor gekoppelten Generators des Fahrzeugs kann während des Betriebs des Triebwerks elektrische Energie erzeugt werden und verschiedenen elektrischen Verbrauchern des Fahrzeugs, beispielsweise einer Waffenanlage, einer Klimaanlage oder einem Kommunikationssystem, bereitgestellt werden.

Um den Betrieb der elektrischen Verbraucher auch dann zu ermöglichen, wenn das Triebwerk des Fahrzeugs 1 abgeschaltet ist, ist an dem militärischen Fahrzeugs 1 ein als Nachrüstteil ausgebildeter Hilfsstromerzeuger 10 angeordnet. Wie der Darstellung in Fig. 1 zu entnehmen ist, ist der Hilfsstromerzeuger 10 in die Außenkontur des Fahrzeugs 1 integriert. Der Hilfsstromerzeuger 10 weist einen ebenfalls als Verbrennungsmotor ausgebildeten Hilfsmotor 14 auf, über welchen ein elektrischer Generator 11 des Hilfsstromerzeugers angetrieben wird. Die von dem Generator 11 bereitgestellte elektrische Energie kann in einer Energiespeicher 12 des Hilfsstromerzeugers zwischengespeichert werden und den elektrischen Verbrauchern des Fahrzeugs 1 bereitgestellt werden.

Wie der Darstellung in Fig. 2 zu entnehmen ist, weist der Hilfsstromerzeuger 10 ein Gehäuse 20 auf, durch welches die Komponenten des Hilfsstromerzeugers 10 gegen Einwirkungen von außen geschützt werden können. Das Gehäuse 20 ist in drei voneinander getrennt ausgebildete Räume gegliedert. In einem ersten Raum des Gehäuses 20, dem Generatorraum 21, ist der mit einem Hilfsmotor 14 gekoppelte Generator 11 angeordnet. Ein weiterer Raum, der Energiespeicherraum 22, dient der Aufnahme eines als Batterie ausgebildeten Energiespeichers 12. Die mit dem Generator elektrisch verbundene Batterie 12 dient zum Starten des Hilfsmotors 14 und kann die erzeugte elektrische Energie Zwischenspeichern. Zudem weist das Gehäuse 20 einen Kühlanlagenraum 23 auf, in welchem eine Kühlanlage 13 angeordnet ist, durch welche der Generator 11 und der Hilfsmotor 14 gekühlt werden können. Die Kühlanlage weist einen Kühler sowie einen Lüfter 16 auf. Der Generatorraum 21, der Energiespeicherraum 22 und der Kühlanlagenraum 23 sind getrennt voneinander ausgebildet, so dass diese Räume unabhängig voneinander temperiert, abgedichtet und ballistisch geschützt werden können, wie nachfolgend dargelegt werden soll.

Zur Trennung des Generatorraums 21, des Energiespeicherraums 22 und des Kühlanlagenraums 23 sind in dem gemeinsamen Gehäuse 20 mehrere Trennwände 26.1, 26.2 vorgesehen. Die einzelnen Räume grenzen somit unmittelbar aneinander an und sind jeweils durch eine gemeinsame Trennwand 26.1, 26.2 voneinander getrennt. Auf diese Weise ergibt sich eine kompakte Bauform des Gehäuses 20. In der Trennwand 26.1 zwischen dem Generatorraum 21 und dem Kühlanlagenraum 23 sind mehrere Leitungsdurchführungen angeordnet, durch welche elektrische Leitungen sowie Wärmemittelleitungen geführt sind. Über die Wärmemittelleitungen kann ein Wärmemittel zwischen dem Generator 11 und dem Hilfsmotor 14 in dem Generatorraum 21 und der Kühlanlage 13 in dem Kühlanlagenraum 23 zirkulieren.

Um die individuelle Temperierung der Komponenten 11, 12, 13 des Hilfsstromerzeugers 10 zu ermöglichen, wird der Lufteinlass und -auslass in den einzelnen Räume 21, 22, 23 unterschiedlich gehandhabt. Die Batterie 12 muss im Vergleich zu den übrigen Komponenten 11, 13, 14 des Hilfsstromerzeugers unterhalb einer gegenüber den anderen Komponenten niedrigen Maximal-Temperatur, vorzugsweise im Bereich von 70°C bis 80°C, gehalten werden. Der Energiespeicherraum 22 ist daher luftdicht von dem Generatorraum 21 und dem Kühlanlagenraum 23 getrennt, so dass die Abwärme des Hilfsmotors 14 aus dem angrenzenden Generatorraum 21 nicht in den Energiespeicherraum 22 gelangen kann und weist eine separate Energiespeicherraum-Kühlanlage zur Temperierung der Batterie 12 auf. Auf diese Weise kann die Batterie 12 effektiv vor einer Überhitzung geschützt werden. Zudem kann verhindert werden, dass sich aus der Batterie 12 austretende Gase durch die Abwärme des Hilfsmotors 14 entzünden können. Wahlweise können in dem Energiespeicherraum 22 zusätzlich zu der Batterie 12 besonders temperaturempfindliche Komponenten angeordnet werden.

Zur Belüftung des Generatorraums 21 weist dieser mehrere als Tauchklappen ausgebildete schließbare Öffnungen auf, in deren geöffnetem Zustand Luft in den Generatorraum 21 eintreten kann.

Während sich der Energiespeicherraum 22 auf einer Seite des Generatorraums 21 befindet, ist der Kühlanlagenraum 23 auf der dem Energiespeicherraum 22 gegenüberliegenden Seite des Generatorraums 21 angeordnet. In der Trennwand 26.1 zwischen dem Kühlanlagenraum 23 und dem Generatorraum 21 ist eine schließbare Öffnung angeordnet, welche in einem offenen Zustand luftdurchlässig ist, so dass die Abwärme des Hilfsmotors 14 in den Kühlanlagenraum 23 abgeleitet werden kann. Der Kühlanlagenraum 23 weist mehrere Öffnungen auf, durch welche die abgeleitete Wärme austreten kann. An einer Seite des Kühlanlagenraums 23 ist eine Öffnung vorgesehen, welche durch ein Gitterrost 15 verschlossen werden kann. Durch die einzelnen Spalte des Gitterrosts 15 kann warme Abluft an die Umgebung abgegeben werden. Die Raumtemperatur in dem Generatorraum 21 wird durch die Belüftung unterhalb einer Maximal-Temperatur von 120°C gehalten. Darüber hinaus werden der Hilfsmotor 14 und der Generator 11 über einen Stromerzeuger-Kühlkreislauf gekühlt, welcher die in dem Kühlanlagenraum 23 angeordnete Kühlanlage 13 umfasst. Zwischen dem Kühler der Kühlanlage 13, dem Generator 11 und dem Hilfsmotor 14 zirkuliert hierzu ein Kühlmittel.

Während einer Tauchfahrt des militärischen Fahrzeugs 1, bei welcher der Hilfsstromerzeuger 10 unter die Wasseroberfläche geraten kann, ist diese Luftkühlung des Generatorraums 21 allerdings nicht möglich, da der Generatorraum 21 nicht mit Wasser geflutet werden darf. Eine Flutung des Generatorraums würde nämlich die Funktionsfähigkeit des Generators 11 und des Hilfsmotors 14 beeinträchtigen. Daher können die Tauchklappen des Generatorraums 21 sowie die schließbare Öffnung zwischen dem Generatorraum 21 und dem Kühlanlagenraum 21 von dem offenen Zustand, in welchem die Belüftung des Generatorraums 21 möglich ist, in einen geschlossenen Zustand verbracht werden, in welchem der Generatorraum 21 luft- und wasserdicht abgeschlossen ist, so dass kein Wasser in den Generatorraum 21 eindringen kann. Während der Tauchfahrt können der Hilfsmotor 14 und der Generator 11 nicht betrieben werden. Der Stromerzeuger-Kühlkreislauf mit der Kühlanlage 13 kann jedoch weiter betrieben werden.

Im Gegensatz zu dem Generatorraum 21 ist der Kühlanlagenraum 23 offen ausgebildet, so dass während der Tauchfahrt des Fahrzeugs 1 Wasser in den Kühlanlagenraum 23 eindringen kann. Hierdurch reduziert sich der Aufwand zur Abdichtung des Gehäuses.

Um zu verhindern, dass es aufgrund von in den Energiespeicherraum 22 eindringenden Wassers zu Kurzschlüssen an der Energiespeicher 12 kommt, ist der Energiespeicherraum 22 wasserdicht abgeschlossen ausgebildet.

Aufgrund der Anordnung des Hilfsstromerzeugers 10 an der Außenkontur des militärischen Fahrzeugs 1 ist es erforderlich, den Hilfsstromerzeuger 10 vor der Einwirkung von Geschossen zu schützen. Hierzu ist das Gehäuse 20 des Hilfsstromerzeugers 10 gepanzert, beispielsweise aus Panzerstahl, ausgebildet. Um das Gewicht des Gehäuses 20 möglichst gering zu halten, können die verschiedenen Räume 21, 22, 23 des Gehäuses unterschiedlich stark gepanzert sein. Hierbei hat es sich als vorteilhaft herausgestellt, den Energiespeicherraum stärker zu panzern als den Generatorraum 21 und den Kühlanlagenraum 22, da der Verfügbarkeit der Energiespeicher 12 eine erhöhte Bedeutung zukommt.

Bei einem Geschosseinschlag in den Generatorraum 21 ist es ferner möglich, den Generator 11 von dem elektrischen Bordnetz des Fahrzeugs 1 zu trennen, so dass ein eventuell durch den Geschosseinschlag verursachter Kurzschluss in dem Generator 11 keine Auswirkungen auf die Spannungsversorgung in dem Fahrzeug 1 hat. Hierzu weist der Hilfsstromerzeuger einen mit dem Generator 11 verbundenen Schutzschalter auf.

Um die Wartung der einzelnen Komponenten 11, 12, 13, 14, 15 des Hilfsstromerzeugers 10 zu ermöglichen, weist das Gehäuse 20 jeweils in einer Außenwand des Generatorraums 21, des Energiespeicherraums 22 sowie des Kühlanlagenraums 23 mehrere verschließbare Wartungsöffnungen 25 auf. Einige der Wartungsöffnungen 25 sind als schwenkbare Türen ausgebildet.

Das Gehäuse 20 des vorstehend ausgebildeten Hilfsstromerzeugers 10 weist einen Generatorraum 21, einen Energiespeicherraum 22 sowie einen Kühlanlagenraum 23 auf, welche getrennt voneinander ausgebildet sind und daher unabhängig voneinander temperiert und gegen äußere Einwirkungen geschützt werden können. Aufgrund der an die Schutzerfordernisse der einzelnen Komponenten 11, 12, 13, 14, 15 des Hilfsstromerzeugers 10 angepassten einzelnen Räume 21, 22, 23 kann die Wahrscheinlichkeit von Ausfällen der Komponenten 11, 12, 13, 14, 15 verringert und die Verfügbarkeit des Hilfsstromerzeugers 10 verbessert werden.

### Bezugszeichen:

- 1: Fahrzeug
- 2: Turm
- 3: Wanne

- 10: Hilfsstromerzeuger
- 11: Generator
- 12: Energiespeicher
- 13: Kühlanlage
- 14: Hilfsmotor
- 15: Gitterrost
- 16: Lüfter

- 20: Gehäuse
- 21: Generatorraum
- 22: Energiespeicherraum
- 23: Kühlanlagenraum
- 25: Wartungsöffnung
- 26.1, 26.2: Trennwand

## Patentansprüche

1. Hilfsstromerzeuger eines militärischen Fahrzeugs (1) aufweisend ein Gehäuse (20) mit einem in einem Generatorraum (21) zur Koppelung mit einem Hilfsmotor (14) angeordneten Generator (11), einem in einem Energiespeicherraum (22) angeordneten Energiespeicher (12) zum Starten des Hilfsmotors (14) und/oder zum Zwischenspeichern der vom Generator (11) erzeugten Energie und einer in einem Kühlanlagenraum (23) angeordneten Kühlanlage (13) zum Kühlen des Generators (11) und/oder des Hilfsmotors (14), wobei der Generatorraum (21), der Energiespeicherraum (22) und der Kühlantagenraum (23) durch Trennwände (26) voneinander getrennt ausgebildet sind.

2. Hilfsstromerzeuger nach Anspruch 1, **dadurch gekennzeichnet, dass** die Trennwand (26) eine Leitungsdurchführung für Gas-, Flüssigkeits- und/oder Elektrik-Leitungen aufweist.

3. Hilfsstromerzeuger nach einem der vorhergehenden Ansprüche, **dadurch gekennzeichnet, dass** der Energiespeicherraum (22) auf einer ersten Seite des Generatorraums (21) angeordnet ist und der Kühlanlagenraum (23) auf einer der ersten Seite gegenüberliegender Seite des Generatorraums (21) angeordnet ist.

4. Hilfsstromerzeuger nach einem der vorhergehenden Ansprüche, **dadurch gekennzeichnet, dass** der Energiespeicherraum (22), der Generatorraum (21) und der Kühlanlagenraum (23) derart gegeneinander abdichtbar sind, dass kein Austausch von Luft und/oder Wasser zwischen den Räumen (21, 22, 23) möglich ist.

5. Hilfsstromerzeuger nach einem der vorhergehenden Ansprüche, **dadurch gekennzeichnet, dass** der Energiespeicherraum (22) wasserdicht abgeschlossen ist.

6. Hilfsstromerzeuger nach einem der vorhergehenden Ansprüche, **dadurch gekennzeichnet, dass** der Kühlanlagenraum (23) Öffnungen aufweist, durch welche bei einer Tauchfahrt Wasser eindringen kann.

7. Hilfsstromerzeuger nach einem der vorhergehenden Ansprüche, **dadurch gekennzeichnet, dass** der Generatorraum (21) eine schließbare Öffnung (24) aufweist, welche in einem offenen Zustand zur Belüftung des Hilfsmotors (14) luftdurchlässig ist und in einem geschlossenen Zustand luft- und wasserdicht geschlossen ist.

8. Hilfsstromerzeuger nach Anspruch 7, **dadurch gekennzeichnet, dass** zwischen dem Generatorraum (21) und der Kühlanlagenraum (23) eine schließbare Öffnung angeordnet ist, welche in einem offenen Zustand zur Belüftung des Hilfsmotors (14) luftdurchlässig ist und in einem geschlossenen Zustand luft- und wasserdicht geschlossen ist.

9. Hilfsstromerzeuger nach einem der vorhergehenden Ansprüche, **dadurch gekennzeichnet, dass** es zumindest teilweise ballistisch gepanzert ausgebildet ist.

10. Hilfsstromerzeuger nach Anspruch 9, **dadurch gekennzeichnet, dass** der Energiespeicherraum (22) stärker gepanzert ist als der Generatorraum (21) und/oder der Kühtanlagenraum (23).

11. Hilfsstromerzeuger nach einem der vorhergehenden Ansprüche, **dadurch gekennzeichnet, dass** der Generatorraum (21) und/oder der Energiespeicherraum (22) und/oder der Kühlanlagenraum (23) eine verschließbare Wartungsöffnung (25) aufweist.

12. Hilfsstromerzeuger nach einem der vorhergehenden Ansprüchen, **dadurch gekennzeichnet, dass** der Energiespeicherraum (22) unabhängig von dem Generatorraum (21) temperiert ist, insbesondere mittels einer separaten Energiespeicher-Kühlanlage.

13. Militärisches Fahrzeug mit einem Hilfsstromerzeuger (10) nach einem der Ansprüche 1 bis 12.

14. Militärisches Fahrzeug nach Anspruch 13, **dadurch gekennzeichnet, dass** das Gehäuse (20) an der Außenkontur des Fahrzeugs (1) angeordnet ist.

15. Militärisches Fahrzeug nach einem der Ansprüche 13 oder 14, **dadurch gekennzeichnet, dass** der Hilfsstromerzeuger (10) einen Stromerzeuger-Wärmekreislauf, insbesondere einen Stromerzeuger-Kühlkreislauf, zum Temperieren des Hilfsmotors (14) mit einer in dem Kühlanlagenraum (23) angeordneten Kühlanlage (13) aufweist, der mit einem Triebwerk-Wärmekreislauf, insbesondere einem Triebwerk-Kühlkreislauf, zum Temperieren eines Triebwerks des Fahrzeugs (1) thermisch koppelbar ist.

## Claims

1. Auxiliary power generator of a military vehicle (1) comprising a housing (20) with a generator (11) arranged in a generator compartment (21) for coupling to an auxiliary motor (14), an energy storage (12) to start auxiliary motor (14) and/or to store temporarily the energy generated by generator (11) arranged in an energy storage compartment (22) and a cooling system (13) for cooling generator (11) and/or auxiliary motor (14) arranged in a cooling system compartment (23), wherein said generator compartment (21), said energy storage compartment (22) and said cooling system compartment (23) are formed separately from one another by partition walls (26).

2. Auxiliary power generator according to claim 1, **characterized in that** the partition (26) has a cable bushing for gas, liquid and/or electrical lines.

3. Auxiliary power generator according to any one of the preceding claims, **characterized in that** said energy storage compartment (22) is arranged on a first side of said generator compartment (21), and said cooling system compartment (23) is a arranged on a side of said generator compartment (21) opposite the first side.

4. Auxiliary power generator according to any one of the preceding claims, **characterized in that** said energy storage compartment (22), said generator compartment (21) and said cooling system compartment (23) can be sealed against one another such that no exchange of air and/or water between said compartments (21, 22, 23) is possible.

5. Auxiliary power generator according to any one of the preceding claims, **characterized in that** said energy storage compartment (22) is closed in a waterproof manner.

6. Auxiliary power generator according to any one of the preceding claims, **characterized in that** said cooling system compartment (23) has openings through which there is an ingress of water on a diving trip.

7. Auxiliary power generator according to any one of the preceding claims, **characterized in that** said generator compartment (21) has a closable opening (24), which, in an open state, is permeable to air for venting said auxiliary motor (14) and, in a closed state, is closed airtight and waterproof.

8. Auxiliary power generator according to claim 7, **characterized in that** between said generator compartment (21) and said cooling system compartment (23) there is arranged a closeable opening in an open state, is permeable to air for venting said auxiliary motor (14) and, in a closed state, is closed airtight and waterproof.

9. Auxiliary power generator according to any one of the preceding claims, **characterized in that** it is formed at least partially ballistic armored.

10. Auxiliary power generator according to claim 9, **characterized in that** said energy storage compartment (22) is more heavily armored than said generator compartment (21) and/or said cooling system compartment (23).

11. Auxiliary power generator according to any one of the preceding claims, **characterized in that** said generator compartment (21) and/or said energy storage compartment (22) and/or said cooling system compartment (23) have/has a closable maintenance opening (25).

12. Auxiliary power generator according to any one of the preceding claims, **characterized in that** said energy storage compartment (22) is temperature-controlled independently from said generator compartment (21), in particular by means of a separate energy storage cooling system.

13. A military vehicle with an auxiliary power generator (10) according to any one of claims 1 to 12.

14. The military vehicle according to claim 13, **characterized in that** said housing (20) is arranged at the outer contour of said vehicle (1).

15. The military vehicle according to any one of claims 13 or 14, **characterized in that** said auxiliary power generator (10) has a power generator-heat circuit, in particular a power generator-cooling circuit, for controlling the temperature of said auxiliary motor (14) with a cooling system (13) arranged in cooling system compartment (23) which can be thermally coupled with an engine-heat circuit, in particular an engine-cooling circuit, for controlling the temperature of an engine of said vehicle (1).

## Revendications

1. Générateur de courant auxiliaire d'un véhicule militaire (1), comprenant un boîtier (20) munir d'un générateur (11) disposé dans un espace de générateur (21) en vue d'être accouplé à un moteur auxiliaire (14), un accumulateur d'énergie (12) disposé dans un espace d'accumulateur d'énergie (22) pour démarrer le moteur auxiliaire (14) et/ou pour le stockage temporaire de l'énergie générée par le générateur (11) et un système de refroidissement (13) disposé dans un espace de système de refroidissement (23) pour refroidir le générateur (11) et/ou le moteur auxiliaire (14), l'espace de générateur (21), l'espace d'accumulateur d'énergie (22) et l'espace de système de refroidissement (23) étant réalisés séparés les uns des autres par des parois de séparation (26).

2. Générateur de courant auxiliaire selon la revendication 1, **caractérisé en ce que** la paroi de séparation (26) possède un passage de ligne pour des conduites de gaz, de liquide et/ou des câbles électriques.

3. Générateur de courant auxiliaire selon l'une des revendications précédentes, **caractérisé en ce que** l'espace d'accumulateur d'énergie (22) est disposé d'un premier côté de l'espace de générateur (21) et l'espace de système de refroidissement (23) est disposé sur un côté opposé au premier côté de l'espace de générateur (21).

4. Générateur de courant auxiliaire selon l'une des revendications précédentes, **caractérisé en ce que** l'espace d'accumulateur d'énergie (22), l'espace de générateur (21) et l'espace de système de refroidissement (23) peuvent être rendus étanches les uns par rapport aux autres de telle sorte qu'aucun échange d'air et/ou d'eau n'est possible entre les espaces (21, 22, 23).

5. Générateur de courant auxiliaire selon l'une des revendications précédentes, **caractérisé en ce que** l'espace d'accumulateur d'énergie (22) est fermé de manière étanche à l'eau.

6. Générateur de courant auxiliaire selon l'une des revendications précédentes, **caractérisé en ce que** l'espace de système de refroidissement (23) possède des ouvertures à travers lesquelles de l'eau peut pénétrer lors d'un déplacement en immersion.

7. Générateur de courant auxiliaire selon l'une des revendications précédentes, **caractérisé en ce que** l'espace de générateur (21) possède une ouverture (24) pouvant être fermée qui, dans une position ouverte, est perméable à l'air pour la ventilation du moteur auxiliaire (14) et qui, dans une position fermée, est fermée de manière étanche à l'air et à l'eau.

8. Générateur de courant auxiliaire selon la revendication 7, **caractérisé en ce qu'**entre l'espace de générateur (21) et l'espace de système de refroidissement (23) est disposée une ouverture pouvant être fermée qui, dans une position ouverte, est perméable à l'air pour la ventilation du moteur auxiliaire (14) et qui, dans une position fermée, est fermée de manière étanche à l'air et à l'eau.

9. Générateur de courant auxiliaire selon l'une des revendications précédentes, **caractérisé en ce qu'**il est au moins partiellement réalisé avec un blindage balistique.

10. Générateur de courant auxiliaire selon la revendication 9, **caractérisé en ce que** l'espace d'accumulateur d'énergie (22) possède un blindage plus résistant que l'espace de générateur (21) et/ou l'espace de système de refroidissement (23).

11. Générateur de courant auxiliaire selon l'une des revendications précédentes, **caractérisé en ce que** l'espace de générateur (21) et/ou l'espace d'accumulateur d'énergie (22) et/ou l'espace de système de refroidissement (23) possèdent une ouverture de maintenance (25) pouvant être fermée.

12. Générateur de courant auxiliaire selon l'une des revendications précédentes, **caractérisé en ce que** la température de l'espace d'accumulateur d'énergie (22) est contrôlée indépendamment de celle l'espace de générateur (21), notamment au moyen d'un système de refroidissement d'accumulateur d'énergie séparé.

13. Véhicule militaire équipé d'un générateur de courant auxiliaire (10) selon l'une des revendications 1 à 12.

14. Véhicule militaire selon la revendication 13, **caractérisé en ce que** le boîtier (20) est disposé sur le contour extérieur du véhicule (1).

15. Véhicule militaire selon l'une des revendications 13 ou 14, **caractérisé en ce que** le générateur de courant auxiliaire (10) possède un circuit thermique de générateur de courant, notamment un circuit de refroidissement de générateur de courant, destiné à contrôler la température du moteur auxiliaire (14) avec un système de refroidissement (13) disposé dans l'espace de système de refroidissement (23), lequel peut être couplé thermiquement à un circuit thermique de groupe propulseur, notamment un circuit de refroidissement de groupe propulseur, afin de contrôler la température d'un groupe propulseur du véhicule (1).
